# EUROPÄISCHE PATENTSCHRIFT

(11) **EP 2 921 220 B1**
(45) Veröffentlichungstag und Bekanntmachung des Hinweises auf die Patenterteilung: **31.05.2017**
(21) Anmeldenummer: 15154309.7
(22) Anmeldetag: 09.02.2015
(51) Int. Cl.: B01F 5/04, B01F 5/06, B01F 3/04, F01N 3/20, F01N 3/28, F01N 13/18

(54) **Mischer für eine Abgasanlage**
Mixer for an exhaust system
Mélangeur pour une installation de gaz d'échappement

(30) Priorität: 19.03.2014 DE 102014205158
(43) Veröffentlichungstag der Anmeldung: 23.09.2015
(73) Patentinhaber: Eberspächer Exhaust Technology GmbH & Co. KG, 66539 Neunkirchen (DE)
(72) Erfinder: Calvo, Silvia, 73730 Esslingen (DE)
(74) Vertreter: Ruttensperger, Bernhard

(56) Entgegenhaltungen:
- EP-A1- 2 098 697
- WO-A1-2015/074926
- DE-A1-102007 012 790
- DE-A1-102008 029 110
- DE-A1-102011 077 645
- US-A- 2 216 846
- US-A1- 2008 060 712
- US-A1- 2010 083 643

## Beschreibung

Die vorliegende Erfindung betrifft einen Mischer für eine Abgasanlage einer Brennkraftmaschine zum Vermischen eines Reaktionsmittels mit einer Abgasströmung, mit den Merkmalen des Oberbegriffs des Anspruchs 1. Die Erfindung betrifft außerdem eine Reaktionsmittelzuführeinrichtung für eine Abgasanlage einer Brennkraftmaschine, die mit einem derartigen Mischer ausgestattet ist. Schließlich betrifft die vorliegende Erfindung eine Abgasanlage für eine Brennkraftmaschine, die mit einer derartigen Reaktionsmittelzuführeinrichtung ausgestattet ist.

Aus der DE 10 2007 028 449 A1 ist ein Mischer für eine Abgasanlage einer Brennkraftmaschine bekannt, der zum Vermischen und Verdampfen eines Reduktionsmittels mit einer Abgasströmung dienst. Hierzu weist der Mischer einen Rohrabschnitt auf, der einen von der Abgasströmung durchströmbaren Strömungsquerschnitt in einer Umfangsrichtung einfasst und der sich in einer Axialrichtung von einer ersten oder anströmseitigen Axialseite des Rohrabschnitts bis zu einer zweiten oder abströmseitigen Axialseite des Rohrabschnitts erstreckt. Des Weiteren umfasst der Rohrabschnitt mehrere Leitschaufeln, die an einer der Axialseiten vom Rohrabschnitt abstehen, und zwar derart, dass sie in den Strömungsquerschnitt hineinragen. Beim bekannten Mischer stehen die Leitschaufeln im Wesentlichen radial vom Rohrabschnitt ab. Ferner sind beim bekannten Mischer alle Leitschaufeln an derselben Axialseite des Rohrabschnitts angeordnet. Des Weiteren sind beim bekannten Mischer sämtliche Leitschaufeln jeweils mit demselben Anstellwinkel gegenüber der Axialrichtung angestellt. Hierdurch wird die Abgasströmung bei ihrer Durchströmung des Mischers bei einem Drall konzentrisch zur Längsmittelachse des Mischers beaufschlagt.

In Abgasanlagen von Brennkraftmaschinen besteht häufig das Bedürfnis, ein Reaktionsmittel, also vorzugsweise ein Oxidationsmittel oder ein Reduktionsmittel, in die Abgasströmung einzubringen. Beispielsweise kann stromauf eines Oxidations-katalysators ein Kraftstoff als Oxidationsmittel eingebracht werden, um durch eine katalytische Umsetzung des Kraftstoffs im Oxidationskatalysator die Wärme in der Abgasströmung zu erhöhen. Beispielsweise kann auf diese Weise ein Partikelfilter auf eine Regenerationstemperatur aufgeheizt werden. Ferner ist es im Rahmen sogenannter SCR-Systeme bekannt, eine wässrige Harnstofflösung als Reduktionsmittel stromauf eines SCR-Katalysators in die Abgasströmung einzubringen, um im SCR-Katalysator eine Reduktion von Stickoxiden zu bewirken. SCR steht dabei für Selective Catalytic Reduction. Mithilfe eines derartigen Mischers kann die Durchmischung des eingebrachten Reaktionsmittels mit der Abgasströmung verbessert werden. Bei flüssigen Reaktionsmitteln kann der Mischer außerdem als Verdampfer dienen und ein Auftreffen flüssigen Reaktionsmittels auf den jeweiligen Katalysator verhindern.

Ein Mischer ist aus der DE 10 2011 077 645 A1 bekannt. Bei diesem bekannten Mischer sind an den beiden axialen Endbereichen des Rohrabschnitts desselben jeweilige Leitschaufelgruppen angeordnet. Jede dieser Leitschaufelgruppen umfasst eine Mehrzahl von in Umfangsrichtung mit gleichmäßigem Abstand aufeinanderfolgenden und in den Strömungsquerschnitt nach radial innen sich hinein erstreckenden Leitschaufeln, sodass jede der beiden Leitschaufelgruppen sich über den gesamten Umfang des Rohrabschnitts erstreckt.Ein Mischer gemäß dem Oberbegriff des Anspruchs 1 ist aus der EP 2 098 697 A1 bekannt. Die vorliegende Erfindung beschäftigt sich mit dem Problem, für einen Mischer der eingangs genannten Art bzw. für eine damit ausgestattete Reaktionsmittelzuführeinrichtung bzw. für eine damit ausgestattete Abgasanlage eine verbesserte Ausführungsform anzugeben, die sich insbesondere durch einen reduzierten Durchströmungswiderstand und/oder durch eine verbesserte Durchmischung zwischen Reaktionsmittel und Abgasströmung auszeichnet.

Erfindungsgemäß wird dieses Problem durch den Mischer gemäß Anspruch 1 gelöst. Vorteilhafte Ausführungsformen sind Gegenstand der abhängigen Ansprüche. Die Erfindung beruht auf dem allgemeinen Gedanken, die Leitschaufeln in wenigstens zwei Leitschaufelgruppen einzuteilen, wobei die wenigstens zwei Leitschaufelgruppen in der Umfangsrichtung benachbart sind so dass sich jede Leitschaufelgruppe in der Umfangsrichtung nur über einen Teil des Umfangs des Rohrabschnitts erstreckt. Des Weiteren wird erfindungsgemäß vorgeschlagen, die Leitschaufeln der einen oder ersten Leitschaufelgruppe gegenüber den Leitschaufeln der anderen oder zweiten Leitschaufelgruppe in der Axialrichtung versetzt anzuordnen. Das bedeutet, dass die Leitschaufeln der ersten Leitschaufelgruppe in der Axialrichtung entweder über die Leitschaufeln der zweiten Leitschaufelgruppe vorstehen oder gegenüber diesen zurückbleiben. Letzteres ist dann der Fall, wenn die Leitschaufeln der zweiten Leitschaufelgruppe in der Axialrichtung über die Leitschaufeln der ersten Leitschaufelgruppe vorstehen. Die Leitschaufeln der ersten Leitschaufelgruppe decken dabei einen ersten Querschnittsbereich des durchströmbaren Strömungsquerschnitts des Rohrabschnitts ab, während die Leitschaufeln der zweiten Leitschaufelgruppe einen zweiten Querschnittsbereich des Strömungsquerschnitts abdecken. Die erfindungsgemäße Bauweise hat zur Folge, dass im Betrieb des Mischers bzw. der Abgasanlage die Abgasströmung zunächst auf die stromauf liegende Leitschaufelgruppe trifft und erst danach auf die stromab liegende Leitschaufelgruppe. Insoweit erfolgt der Druckanstieg bei der Durchströmung des Mischers in wenigstens zwei Stufen. Der sich dabei insgesamt einstellende Druckanstieg bleibt jedoch hinter dem Druckanstieg zurück, der sich dann einstellt, wenn alle Leitschaufeln in demselben Axialabschnitt angeordnet sind und dementsprechend von der Abgasströmung gleichzeitig angeströmt werden. Dieser reduzierte Druckanstieg wird dadurch erklärt, dass die Abgasströmung beim Auftreffen auf die stromauf liegende Leitschaufelgruppe teilweise in den anderen Querschnittsbereich ausweichen kann, der der stromab liegenden Leitschaufelgruppe zugeordnet ist. Trifft die Abgasströmung anschließend auf die stromab liegende Leitschaufelgruppe, kann sie wieder teilweise in den Querschnittsbereich ausweichen, der der stromauf liegenden Leitschaufelgruppe zugeordnet ist. Somit ist bei dieser axial versetzten Anordnung der Leitschaufeln nicht der gesamte Strömungsquerschnitt durch die Leitschaufeln verblockt, sondern jeweils nur ein Querschnittsbereich, so dass die Abgasströmung jeweils ausweichen und so bei reduziertem Strömungswiderstand den Mischer durchdringen kann.

Bevorzugt ist dabei eine Ausführungsform, bei der zumindest an einer der Axialseiten die zugehörigen Leitschaufeln in die wenigstens zwei, axial zueinander versetzt angeordneten Leitschaufelgruppen unterteilt sind. Somit erfolgt die gestufte Umströmung der Leitschaufelgruppen am Einlass des Mischers (anströmseitige Axialseite oder Anströmseite des Mischers) oder am Auslass des Mischers (abströmseitige Axialseite oder Abströmseite des Mischers). Denkbar ist eine Ausführungsform, bei der die axial versetzten Leitschaufelgruppen nur an der Anströmseite oder nur an der Abströmseite vorgesehen sind. An der jeweils anderen Axialseite sind dann entweder keine Leitschaufeln vorgesehen oder es konventionell in einem gemeinsamen Axialabschnitt angeordnete Leitschaufeln vorgesehen sein. Ebenso ist eine Ausführungsform denkbar, bei der sowohl an der Anströmseite als auch an der Abströmseite axial versetzte Leitschaufelgruppen vorhanden sind.

Bei einer alternativen Ausführungsform kann vorgesehen sein, dass die Leitschaufeln der ersten Leitschaufelgruppe an der einen Axialseite, z.B. an der Abströmseite, angeordnet sind, während die Leitschaufeln der zweiten Leitschaufelgruppe an der anderen Axialseite, z.B. an der Anströmseite, angeordnet sind.

Zweckmäßig weisen zumindest einige der Leitschaufeln jeweils einen Anstellwinkel gegenüber der Axialrichtung auf, wodurch sich die Strömungsvermischung verbessert.

Gemäß einer vorteilhaften Ausführungsform können dabei die Anstellwinkel der Leitschaufeln der ersten Leitschaufelgruppe andere Anstellwinkel aufweisen als die Leitschaufeln der zweiten Leitschaufelgruppe. Hierdurch lässt sich die Durchströmung des Mischers beeinflussen. Stark abweichende Anstellwinkel sind dabei erst durch den axialen Versatz der Leitschaufelgruppen möglich, da es innerhalb desselben Axialabschnitts zu einer Kollision benachbarter Leitschaufeln kommen kann, wenn diese stark unterschiedliche Anstellwinkel besitzen.

Erfindungsgemäß sind die Anstellwinkel der Leitschaufeln der ersten Leitschaufelgruppe entgegengesetzt zu den Anstellwinkeln der Leitschaufeln der zweiten Leitschaufelgruppe orientiert.
Die axial versetzte Anordnung der beiden Leitschaufelgruppen ermöglicht es, den Leitschaufeln der einen Leitschaufelgruppe hinsichtlich ihres Anstellwinkels eine andere Orientierung zu geben als den Leitschaufeln der anderen Leitschaufelgruppe. Beispielsweise ist es dadurch möglich mit Hilfe der Leitschaufeln der ersten Leitschaufelgruppe die Abgasströmung in einer ersten Drallrichtung mit einem ersten Drall zu beaufschlagen, beispielsweise mit einem Rechtsdrall. Mit den Leitschaufeln der zweiten Leitschaufelgruppe lässt sich dann die Abgasströmung in einer der ersten Drallrichtung entgegengesetzten zweiten Drallrichtung mit einem zweiten Drall beaufschlagen, beispielsweise mit einem Linksdrall. Insgesamt wird dadurch erreicht, dass in dem der ersten Leitschaufelgruppe zugeordneten Querschnittsbereich eine erste Wirbelwalze entsteht, während in dem der zweiten Leitschaufelgruppe zugeordneten Querschnittsbereich eine zweite Wirbelwalze parallel zu ersten Wirbelwalze entsteht, die jedoch entgegengesetzt rotiert. Hierdurch ergibt sich eine intensive Durchmischung.

Gemäß einer anderen Ausführungsform können der Rohrabschnitt und die Leitschaufeln durch ein einziges Blechformteil gebildet sein. Mit anderen Worten, der Rohrabschnitt ist zusammen mit den Leitschaufeln aus einem einzigen Blechkörper durch Umformen hergestellt. Hierdurch lässt sich der Mischer besonders preiswert realisieren. Insbesondere entfällt ein Anbauen der Leitschaufeln an den Rohrabschnitt. Grundsätzlich kann der Rohrabschnitt bzw. der Mischer einen beliebigen Strömungsquerschnitt besitzen, in den die Leitschaufeln hineinragen. Denkbar sind insbesondere beliebige polygonale Querschnitte, wobei Ecken eines solchen polygonalen Querschnitts zweckmäßig ausgerundet sein können. Bevorzugt ist jedoch ein runder Querschnitt, insbesondere ein kreisförmiger oder elliptischer oder ovaler Querschnitt.

Gemäß einer anderen Ausführungsform kann zumindest innerhalb einer der Leitschaufelgruppen wenigstens eine Leitschaufel einen anderen Anstellwinkel gegenüber der Axialrichtung aufweisen als wenigstens eine andere Leitschaufel derselben Leitschaufelgruppe. Durch Variieren des Anstellwinkels bei einer oder mehreren Leitschaufeln ist es möglich, die Durchströmung des Mischers weiter zu beeinflussen bzw. zu optimieren. Insbesondere kann es zweckmäßig sein, im Bereich eines Übergangs zwischen der einen Leitschaufelgruppe und der anderen Leitschaufelgruppe die Anstellwinkel zu variieren, um die Drallbildung bei der Durchströmung und somit die Durchmischung zu verbessern.

Bei einer anderen Ausführungsform kann zumindest eine der Leitschaufeln der einen Leitschaufelgruppe eine andere Schaufellänge aufweisen als wenigstens eine Leitschaufel der anderen Leitschaufelgruppe, wobei die Schaufellänge jeweils von einem am Rohrabschnitt angeordneten Schaufelfuß zu einer vom Rohrabschnitt entfernten Schaufelspitze gemessen ist. Durch Verlängern einzelner Leitschaufeln ist es möglich, auch einen zentralen Bereich des Mischers mit Schaufelfläche abzudecken, um den Mischer im zentralen Bereich des Strömungsquerschnitts weitgehend blickdicht zu gestalten.

Zusätzlich oder alternativ kann zumindest innerhalb einer der Leitschaufelgruppen wenigstens eine Leitschaufel eine andere Schaufellänge aufweisen als wenigstens eine andere Leitschaufel dieser Leitschaufelgruppe. Auch hier wird die Schaufellänge von einem am Rohrabschnitt angeordneten Schaufelfuß bis zu einer vom Rohrabschnitt entfernten Schaufelspitze gemessen. Auch diese Maßnahme kann zur Verbesserung der Abdeckung des Strömungsquerschnitts mit Schaufelfläche genutzt werden.

Entsprechend einer vorteilhaften Weiterbildung kann vorgesehen sein, dass sich zumindest eine der längeren Leitschaufeln bis über eine Längsmittelachse hinaus erstreckt. Hierdurch wird auch der Bereich der Längsmittelachse von der jeweilgen längeren Leitschaufel in der Axialrichtung bzw. in der Hauptströmungsrichtung abgedeckt, so dass auch in diesem zentralen Querschnittsbereich des Mischers die Gefahr eines Tropfendurchschlags reduziert ist.

Gemäß einer bevorzugten Ausführungsform können sich die erste Leitschaufelgruppe und die zweite Leitschaufelgruppe in der Umfangsrichtung jeweils über einen Winkelbereich zwischen einschließlich 30° bis einschließlich 330°, vorzugsweise über einen Winkelbereich zwischen einschließlich 60° bis einschließlich 300°, insbesondere über einen Winkelbereich zwischen einschließlich 90° bis einschließlich 270°, oder jeweils etwa über den halben Umfang des Rohrabschnitts erstrecken. Sofern die Leitschaufelgruppen an derselben Axialseite des Rohrabschnitts angeordnet sind, ergibt die Summe der den Leitschaufelgruppen zugeordneten einzelnen Umfangsabschnitte maximal 360°. Sind die Leitschaufelgruppen dagegen an verschiedenen Axialabschnitten des Rohrabschnitts angeordnet, kann die Summe der den Leitschaufelgruppen zugeordneten einzelnen Umfangsabschnitte auch mehr als 360° betragen. Sind auf diese Weise insgesamt mehr als 360° durch Leitschaufeln abgedeckt, ergibt sich in der Axialrichtung eine gegenseitige Überdeckung der axial versetzten Leitschaufelgruppen.

In dem Fall, dass sich die beiden Leitschaufelgruppen jeweils über etwa den halben Umfang des Rohrabschnitts erstrecken, sind dann genau zwei Leitschaufelgruppen vorgesehen. Sie erstrecken sich jeweils über 180°. Bei einer anderen Ausführungsform ist denkbar, dass wiederum nur zwei Leitschaufelgruppen vorgesehen sind, wobei sich die eine Leitschaufelgruppe über mehr als 180° in der Umfangsrichtung erstreckt, während die andere Leitschaufelgruppe dann entsprechend weniger Umfangsanteil besitzt. Gemäß einer anderen Ausführungsform ist denkbar, die Leitschaufeln insgesamt in drei oder mehr Leitschaufelgruppen zu unterteilen. Bei drei Leitschaufelgruppen sind die Leitschaufeln der dritten Leitschaufelgruppe axial zwischen den Leitschaufeln der ersten Leitschaufelgruppe und den Leitschaufeln der zweiten Leitschaufelgruppe angeordnet.

Bei einer anderen Ausführungsform können die erste Leitschaufelgruppe und die zweite Leitschaufelgruppe jeweils dieselbe Anzahl an Leitschaufeln enthalten. Hierdurch baut der Mischer hinsichtlich seiner Durchströmung vergleichsweise symmetrisch. Alternativ ist auch eine Ausführungsform denkbar, bei der die Leitschaufelgruppen unterschiedliche Anzahlen an Leitschaufeln besitzen.

Bei einer weiteren Ausführungsform kann vorgesehen sein, dass die Leitschaufeln der ersten Leitschaufelgruppe eine andere Schaufelbreite besitzen als die Leitschaufeln der zweiten Leitschaufelgruppe. Die jeweilige Schaufelbreite ist dabei quer zur Schaufellänge gemessen und erstreckt sich von einer Anströmkante der jeweiligen Leitschaufel bis zu einer Abströmkante der jeweiligen Leitschaufel. Durch unterschiedliche Schaufelbreiten lassen sich einerseits die Auftrefffläche und andererseits die Strömungslenkung und somit die Durchmischung und der Strömungswiderstand beeinflussen.

Gemäß einer anderen vorteilhaften Ausführungsform kann vorgesehen sein, dass innerhalb wenigstens einer der Leitschaufelgruppen zumindest eine der Leitschaufeln gegenüber wenigstens einer anderen Leitschaufel derselben Leitschaufelgruppe axial versetzt angeordnet ist. Auf diese Weise kann bereits innerhalb der jeweiligen Leitschaufelgruppe eine axial gestufte Anströmung der einzelnen Leitschaufeln durch die Abgasströmung erzielt werden. Im Extremfall kann die jeweilige Leitschaufelgruppe nur aus einer einzigen Leitschaufel bestehen. Bevorzugt sind jedoch Ausführungsformen, bei welchen die jeweilige Leitschaufelgruppe jeweils mehrere Leitschaufeln enthält.

Gemäß einer besonders vorteilhaften Ausführungsform können alle Leitschaufeln relativ zu einander berührungslos angeordnet sein. Bei einer derartigen Bauweise ist die Gefahr einer unerwünschten Geräuschentwicklung reduziert. Ferner können sich die Leitschaufeln temperaturbedingt ungestört ausdehnen, ohne dass es dabei zu Verspannungen kommt.

Bei einer erfindungsgemäßen Reaktionsmittelzuführeinrichtung ist eine Rohranordnung zum Führen einer Abgasströmung vorgesehen, wobei an dieser Rohranordnung ein Injektor zum Erzeugen eines Sprühstrahls aus Reaktionsmittel zum Einbringen des Reaktionsmittels in die Gasströmung vorgesehen ist. Bezüglich dieser Gasströmung ist stromab des Injektors in der Rohranordnung dann ein Mischer der vorstehend genannten Art angeordnet.

Gemäß einer vorteilhaften Weiterbildung kann der Injektor seitlich an der Rohranordnung angeordnet sein. Der Mischer ist dann so im Rohrabschnitt angeordnet, dass sich die erste Leitschaufelgruppe und die zweite Leitschaufelgruppe an einer Anströmseite des Mischers befinden und dass die erste Leitschaufelgruppe dem Injektor zugewandt ist, während die zweite Leitschaufelgruppe vom Injektor abgewandt ist. Ferner sind die Leitschaufeln der ersten Leitschaufelgruppe in Richtung einer Abströmseite des Mischers zu den Leitschaufeln der zweiten Leitschaufelgruppe axial versetzt angeordnet. Dies hat zur Folge, dass bei seitlich angeordnetem Injektor der Sprühstrahl besser auf die Leitschaufeln auftreffen kann. Es hat sich gezeigt, dass dadurch die Gefahr eines Tropfendurchschlags durch den Mischer reduziert ist.

Gemäß einer anderen vorteilhaften Ausführungsform kann der Injektor einen gegenüber der Axialrichtung des Mischers geneigten Sprühstrahl erzeugen. Bei seitlicher Anordnung und geneigtem Sprühstrahl vereinfacht sich der Anbau des Injektors an die Rohranordnung. Gleichzeitig ergibt sich dadurch innerhalb der Abgasströmung eine spezielle Strömungsdynamik, die mithilfe des hier vorgestellten Mischers berücksichtigt werden kann, um beispielsweise einen Tropfendurchschlag durch den Mischer zu vermeiden. Ferner lässt sich die Verdampfung des Reaktionsmittels, das in flüssiger Form auf die Leitschaufeln trifft, verbessern.

Besonders kompakt ist eine Ausführungsform, bei welcher die Rohranordnung bezüglich der Abgasströmung stromauf des Mischers einen Bogen aufweist, der in der Abgasströmung ein Todwassergebiet erzeugt. Der Mischer ist in diesem Fall zweckmäßig so angeordnet, dass sich die erste Leitschaufelgruppe und die zweite Leitschaufelgruppe an einer Anströmseite des Mischers befinden und dass die Leitschaufeln der zweiten Leitschaufelgruppe in das Todwassergebiet axial hineinragen. In einem derartigen Todwassergebiet herrschen reduzierte Strömungsgeschwindigkeiten, die dazu führen können, dass der Sprühstrahl eine den durchströmbaren Querschnitt der Rohranordnung begrenzende Rohrwand trifft. Diese Rohrwand ist vergleichsweise kühl, was einer raschen Verdampfung entgegen wirkt. Durch das Positionieren der Leitschaufeln der zweiten Leitschaufelgruppe in diesem Todwassergebiet trifft der Sprühstrahl bestenfalls auf die Leitschaufeln der zweiten Leitschaufelgruppe. Der Mischer besitzt eine höhere Temperatur als die besagte Rohrwand, wodurch die Verdampfung des Reaktionsmittels unterstützt wird.

Bei einer erfindungsgemäßen Abgasanlage ist ein SCR-Katalysator vorgesehen. Ferner ist stromauf des SCR-Katalysators eine Reaktionsmittelzuführeinrichtung der vorstehend genannten Art angeordnet. Als Reaktionsmittel bzw. als Reduktionsmittel wird hierbei zweckmäßig eine wässrige Harnstofflösung verwendet. Diese wird durch Thermolyse und Hydrolyse in Ammoniak und Kohlendioxid umgewandelt. Im SCR-Katalysator kann dann eine Reduktion von Stickoxiden zu Stickstoff und Wasser erfolgen.

Vorteilhaft ist eine Ausführungsform, bei welcher stromauf des Injektors ein Oxidationskatalysator, z.B. ein Dieseloxidationskatalysator, angeordnet ist. Der Oxidationskatalysator kann in bekannter Weise Brennstoffreste der Abgasströmung umsetzen. Zusätzlich oder alternativ kann stromab des Mischers ein Partikelfileter, z.B. ein Dieselpartikelfilter, angeordnet sein. Mithilfe eines Partikelfilters lassen sich Partikel, insbesondere Rußpartikel, aus der Abgasströmung herausfiltern. Grundsätzlich kann es sich bei einem derartigen Partikelfilter um einen separaten Partikelfilter handeln, der zusätzlich zum SCR-Katalysator vorhanden ist. Der Partikelfilter ist dabei zweckmäßig stromab des SCR-Katalysators angeordnet. Entsprechend einer besonders vorteilhaften Ausführungsform, kann der SCR-Katalysator in Form einer SCR-Katalysator-Beschichtung ausgestaltet sein, wobei dann ein Partikelfilter vorgesehen ist, der mit dieser SCR-Katalysator-Beschichtung versehen ist. Auf diese Weise wird die SCR-Katalysator-Funktion in den Partikelfilter integriert. Derartige Partikelfilter mit SCT-Katalysator-Beschichtung sind beispielsweise aus der DE 10 2012 105 822 A1 bekannt. Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Abgasanlage mit einer Reaktionsmitteleinspritzeinrichtung, die einen Mischer aufweist,
- Fig. 2: eine Abgasanlage wie in Fig. 1 jedoch bei einer anderen Ausführungsform,
- Fig. 3: eine Abgasanlage wie in Fig. 1, jedoch bei einer anderen Ausführungsform des Mischers,
- Fig. 4 bis 7: jeweils eine Abgasanlage wie in Fig. 3 jedoch bei weiteren Ausführungsformen des Mischers,
- Fig. 8: eine Axialansicht des Mischers bei transparent dargestellten Leitschaufeln,
- Fig. 9: eine isometrische Ansicht des Mischers,
- Fig. 10: eine Seitenansicht des Mischers,
- Fig. 11: eine Abwicklung eines Blechkörpers, aus dem der Mischer herstellbar ist,
- Fig. 12: eine Abwicklung wie in Fig. 11, jedoch bei einer anderen Ausführungsform des Mischers.

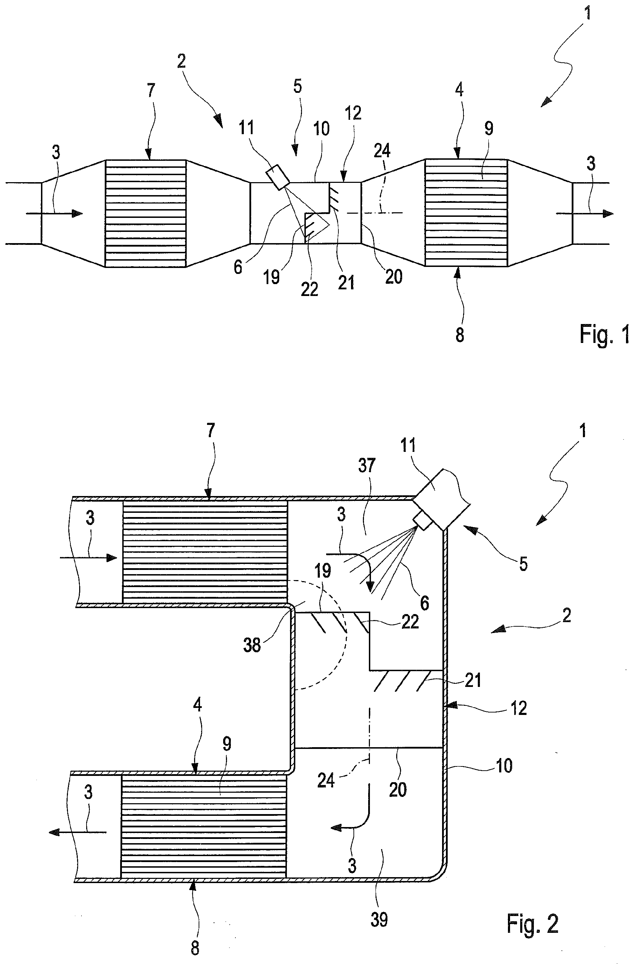

Entsprechend den Figuren 1 bis 7 umfasst eine hier nur teilweise dargestellte Abgasanlage 1, die bei einer Brennkraftmaschine zum Abführen von Verbrennungsabgasen dient, einen Abgasstrang 2 zum Führen einer durch Pfeile angedeuteten Abgasströmung 3. Im Abgasstrang 2 ist ein SCR-Katalysator 4 angeordnet.

Stromauf des SCR-Katalysators 4 ist im Abgasstrang 2 eine Reaktionsmittelzuführeinrichtung 5 angeordnet. Mithilfe der Reaktionsmittelzuführeinrichtung 5 lässt sich ein Reaktionsmittel, zum Beispiel in Form eines Sprühstrahls 6, der Abgasströmung 3 zuführen. Im Zusammenhang mit einem solchen SCR-Katalysator 4 wird als Reaktionsmittel ein Reduktionsmittel verwendet. Mithilfe des Reduktionsmittels lassen sich im SCR-Katalysator 4 Stickoxide reduzieren. Im Beispiel enthält der Abgasstrang 2 stromauf der Reaktionsmittelzuführeinrichtung 5 einen Oxidationskatalysator 7, bei dem es sich vorzugsweise um einen Dieseloxidationskatalysator handelt. Stromab der Reaktionsmittelzuführeinrichtung 5 kann der Abgasstrang 2 einen Partikelfilter 8 enthalten, bei dem es sich insbesondere um einen Dieselpartikelfilter handelt. Der Partikelfilter 8 kann grundsätzlich stromab des SCR-Katalysators 4 angeordnet sein. In diesem Fall bilden SCR-Katalysator 4 und Partikelfilter 8 separate Bauteile. In den Figuren 1 bis 7 ist jedoch eine bevorzugte Ausführungsform gezeigt, bei welcher der SCR-Katalysator 4 durch eine SCR-Katalysator-Beschichtung 9 gebildet ist. Mit welcher der Partikelfilter 8 versehen ist. Der Partikelfilter 8 besitzt beispielsweise einen keramischen Filterkörper, der eine Vielzahl von Einlasskanälen, die auslassseitig verschlossen sind, und eine Vielzahl von Auslasskanälen, die einlassseitig verschlossen sind, aufweist, wobei Trennwände, welche die Einlasskanäle von den Auslasskanälen trennen, für die Abgasströmung 3 durchlässig sind, während sie für die mitgeführten Partikel im Wesentlichen undurchlässig sind. Die Einlasskanäle und/oder die Auslasskanäle können nun mit besagter SCR-Katalysator-Beschichtung 9 ausgestattet sein, wodurch die Funktion des SCR-Katalysators 4 in den Partikelfilter 8 integriert ist.

Entsprechend den Figuren 1 bis 7 umfasst die Reaktionsmittelzuführeinrichtung 5 eine Rohranordnung 10, die in den Abgasstrang 2 eingebunden ist und die dementsprechend ebenfalls zum Führen der Abgasströmung 3 dient. Ferner umfasst die Reaktionsmittelzuführeinrichtung 5 einen Injektor 11 zum Erzeugen des Sprühstrahls 6 aus Reaktionsmittel, um das Reaktionsmittel in die Gasströmung 3 einzubringen. Der Injektor 11 ist hierzu an der Rohranordnung 10 angeordnet. Die Reaktionsmittelzuführeinrichtung 5 umfasst außerdem einen Mischer 12, der bezüglich der Abgasströmung 3 stromab des Injektors 11 in der Rohranordnung 10 angeordnet ist. Der Mischer 12 ist bezüglich der Rohranordnung 10 ein separates Bauteil. Er ist in die Rohranordnung 10 eingesetzt und auf geeignete Weise daran befestigt.

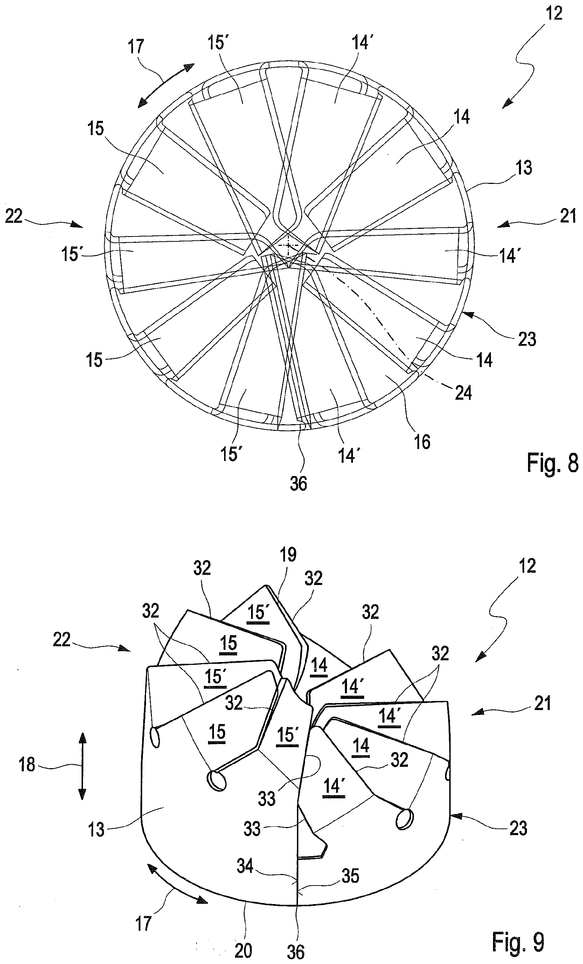

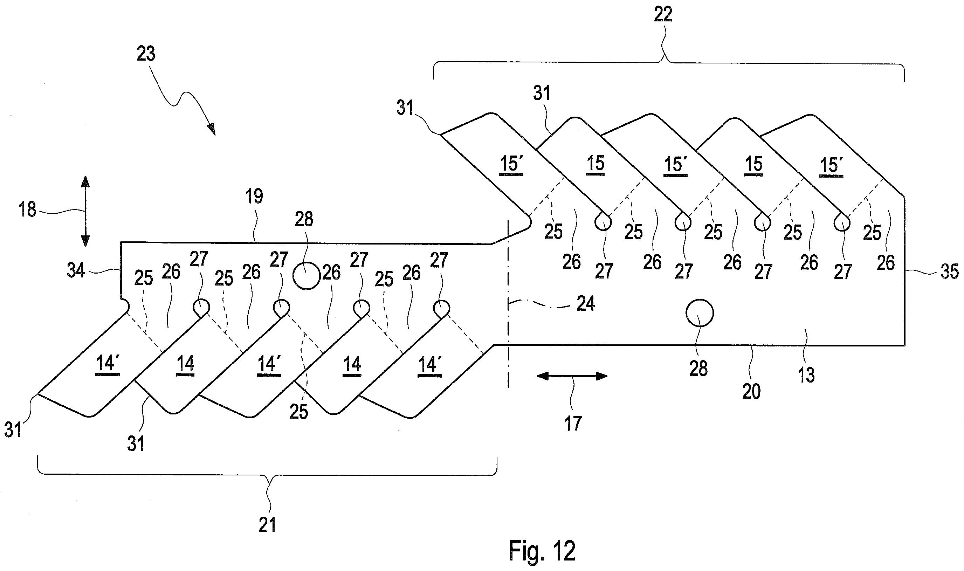

Bevorzugte Ausführungsformen des Mischers 12 werden nachfolgend anhand der Figuren 8 bis 12 näher beschrieben. Der Mischer 12 umfasst einen Rohrabschnitt 13 und mehrere Leitschaufeln 14, 15. Der Rohrabschnitt 13 fasst einen von der Abgasströmung 3 durchströmbaren Strömungsquerschnitt 16 in einer Umfangsrichtung 17 ein. Ferner erstreckt sich der Rohrabschnitt 13 in einer Axialrichtung 18, die parallel zu einer Längsmittelachse 24 des Rohrabschnitts 13 bzw. des Mischers 12 verläuft, von einer ersten Axialseite 19 bis zu einer zweiten Axialseite 20. Die Leitschaufeln 14, 15 sind zumindest an einer der Axialseiten 19, 20 angeordnet. Im Beispiel der Figuren 8 bis 11 sind alle Leitschaufeln 14, 15 an der ersten Axialseite 19 angeordnet. Im Beispiel der Fig. 12 sind die Leitschaufeln 14, 15 dagegen auf beide Axialseiten 19, 20 verteilt. An der jeweiligen Axialseite 19 bzw. 20 stehen die Leitschaufeln 14, 15 vom Rohrabschnitt 13 so ab, dass sie in den Strömungsquerschnitt 16 hineinragen. Hierbei erstrecken sich die einzelnen Leitschaufeln 14 im Wesentlichen radial. Es ist klar, dass die Erstreckungsrichtung der Leitschaufeln 14, 15 grundsätzlich auch eine Axialkomponente aufweisen kann. In der Regel ist jedoch die Radialkomponente größer als die Axialkomponente.

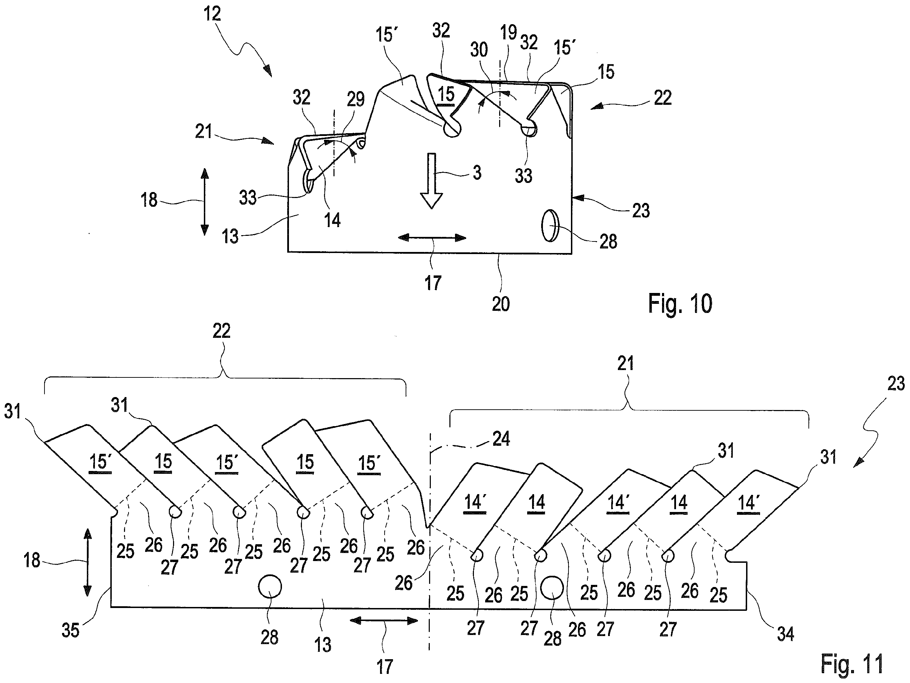

Gemäß den Fig. 8 bis 12 sind die Leitschaufeln 14, 15 in der Umfangsrichtung 17 in eine erste Leitschaufelgruppe 21 und eine zweite Leitschaufelgruppe 22 eingeteilt. Die mit 14 bezeichneten Leitschaufeln sind der ersten Leitschaufelgruppe 21 zugeordnet, während die mit 15 bezeichneten Leitschaufeln der zweiten Leitschaufelgruppe 22 zugeordnet sind. Die beiden Leitschaufelgruppen 21, 22 folgen bei diesen Beispielen in der Umfangsrichtung 17 aufeinander, so dass sie sich in der Axialrichtung gegenseitig im Wesentlichen nicht überdecken. Bei dem in den Fig. 8 bis 11 vorgestellten Mischer 12 sind nun die Leitschaufeln 14 der ersten Leitschaufelgruppe 21 an der ersten Axialseite 19 gegenüber den Leitschaufeln 15 der zweiten Leitschaufelgruppe 22 axial, also in der Axialrichtung 18 versetzt angeordnet. Bevorzugt handelt es sich bei der ersten Axialseite 19 um die angeströmte Axialseite, also um die Anströmseite des Mischers 12. Für diesen Fall ist in Figur 10 die Abgasströmung 3 durch einen entsprechenden Strömungsrichtungspfeil angedeutet. Dementsprechend sind die Leitschaufeln 14 der ersten Leitschaufelgruppe 21 bezüglich der Strömungsrichtung der Abgasströmung 3 gegenüber den Leitschaufeln 15 der zweiten Leitschaufelgruppe 22 zurückversetzt bzw. stromab versetzt.

Im Unterschied dazu zeigt Fig. 12 eine Ausführungsform, bei welcher die beiden Leitschaufelgruppen 21, 22 an verschiedenen Axialseiten 19, 20 des Rohrkörpers 13 angeordnet bzw. ausgebildet sind. In Fig 12 sind demnach die ersten Leitschaufeln 14 der ersten Leitschaufelgruppe 21 an der Abströmseite ausgebildet, die der zweiten Axialseite 20 entspricht, während die zwieten Leitschaufeln 15 der zweiten Leitschaufelgruppe 22 an der Anströmseite ausgebildet sind, die der ersten Axialseite 19 entspricht.

Vorzugsweise ist der Mischer 12 gemäß den Fig. 8 bis 12 als Blechformteil 23 konzipiert. Das bedeutet, dass der Rohrabschnitt 13 mit allen Leitschaufeln 14, 15 durch Umformung aus einem einzigen Blechkörper hergestellt ist, der dann nach der Umformung das Blechformteil 23 bildet. In den Figuren 11 und 12 ist jeweils die Abwicklung des Blechformteils 23 dargestellt. Die Abwicklung repräsentiert dabei den Zustand des Blechformteils 23 vor der Umformung. In den Figuren 11 und 12 ist das Blechformteil 23 eben. Der Rohrabschnitt 13 und die einzelnen Schaufeln 14, 15 sind bereits vorhanden. Zum Erzeugen des Mischers 12 muss das Blechformteil 23 lediglich um die Längsmittelachse 24 des Mischers 12 bzw. des Rohrabschnitts 13 in der Umfangsrichtung 17 gebogen werden. Außerdem müssen die Schaufeln 14 jeweils um eine Biegekante 25 umgebogen werden. Im Bereich von Schaufelfüßen 26 sind Freistiche 27 erkennbar, welche die Kerbwirkung reduzieren. Ferner sind im Rohrabschnitt 13 zwei Öffnungen 28 erkennbar, die beispielsweise zum Fixieren des Mischers 12 in der Rohranordnung 10 genutzt werden können. Zusätzlich oder alternativ können diese Öffnungen 28 auch bei der Herstellung und/oder beim Handling des Mischers 12 genutzt werden.

In den Beispielen der Flg. 8 bis 12 ist der Blechformkörper 23 kreisförmig gebogen, wodurch der Strömungsquerschnitt 16 kreisförmig ist. Ferner sind zwei Längsenden 34, 35 des Blechformteils 23 gemäß Fig. 9 auf Stoß geformt, so dass sie in einem Stoß 36 in der Umfangsrichtung 17 aneinander stoßen. Dieser Stoß 36 ist auch in Fig. 8 erkennbar. Ebenso sind andere runde Querschnitte oder auch unrunde Querschnitte denkbar.

Bei den in den Figuren 8 bis 12 gezeigten Ausführungsformen sind die Leitschaufeln 14, 15 gegenüber der Axialrichtung 18 angestellt, sodass sie jeweils einen Anstellwinkel 29 bzw. 30 besitzen. An der jeweiligen Leitschaufel 14, 15 kann der jeweilige Anstellwinkel 29, 30 entlang der Längsrichtung der jeweiligen Leitschaufel 14, 15 variieren. Dabei besitzen die Leitschaufeln 14 der ersten Leitschaufelgruppe 21 erste Anstellwinkel 29, während die Leitschaufeln 15 der zweiten Leitschaufelgruppe 22 zweite Anstellwinkel 30 aufweisen. Als Anstellwinkel 29, 30 wird dabei derjenige Winkel verstanden, den eine Sehne der jeweiligen Leitschaufel 14, 15 gegenüber der Axialrichtung 18 besitzt. Die Sehne der jeweiligen Leitschaufel 14, 15 ist eine Gerade, welche innerhalb eines Querschnittsprofils der jeweiligen Leitschaufel 14, 15 eine Anströmkante mit einer Abströmkante der jeweiligen Leitschaufel 14, 15 verbindet. Das Querschnittsprofil ist dabei senkrecht zu einer Schauffellänge gemessen. Gemäß den Figuren 11 und 12 erstreckt sich die Schaufellänge dabei innerhalb der jeweiligen Leitschaufel 14, 15 von einem Schaufelfuß 26 bis zu einer Schaufelspitze 31. Für den Fall, dass die Leitschaufeln 14, 15 an der Anströmseite des Rohrabschnitts 13 bzw. des Mischers 12 angeordnet sind, sind in den Figuren 9 und 10 einige der Anströmkanten mit 32 und einige der Abströmkanten mit 33 bezeichnet.

Insbesondere den Figuren 9 bis 11 lässt sich nun entnehmen, dass die Anstellwinkel 29 der Leitschaufeln 14 der ersten Leitschaufelgruppe 21 entgegengesetzt zu den Anstellwinkeln 30 der Leitschaufeln 15 der zweiten Leitschaufelgruppe 22 orientiert sind. Gemäß Fig. 10 sind die Leitschaufeln 14 der ersten Leitschaufelgruppe 21 "nach rechts" angestellt, während die Leitschaufeln 15 der zweiten Leitschaufelgruppe 22 "nach links" angestellt sind. Innerhalb der ersten Leitschaufelgruppe 14 besitzen die Anstellwinkel 29 der zugehörigen Leitschaufeln 14, die im Folgenden auch als erste Leitschaufeln 14 bezeichnet werden können, dieselbe Orientierung. Innerhalb der zweiten Leitschaufelgruppe 22 besitzen die Anstellwinkel 30 der zugehörigen Leitschaufeln 15, die im Folgenden auch als zweite Leitschaufeln 15 bezeichnet werden können, dieselbe Orientierung. Somit erzeugen die ersten Leitschaufeln 14 der ersten Leitschaufelgruppe 21 einen in einer ersten Drehrichtung orientierten Drall, während die zweiten Leitschaufeln 15 der zweiten Leitschaufelgruppe 22 bei ihrer Durchströmung einen in einer entgegengesetzten zweiten Drehrichtung orientierten Drall erzeugen. Hierdurch ergibt sich bei einer Durchströmung des Mischers 12 eine besonders intensive Durchmischung.

Wie sich insbesondere Fig. 11 entnehmen lässt, sind in der ersten Leitschaufelgruppe 21 die beiden linken Leitschaufeln 14 mit einer anderen Orientierung gegenüber der Axialrichtung 18 versehen als die drei rechten Leitschaufeln 14. Beim Umbiegen um die jeweiligen Biegekante 25 entstehen dadurch unterschiedliche Anstellwinkel 29 bei den ersten Leitschaufeln 14 der ersten Leitschaufelgruppe 21. Die Anstellwinkel 29 sind dann betragsmäßig unterschiedlich, jedoch hinsichtlich ihrer Orientierung gleichsinnig. Entsprechendes gilt auch für die zweiten Leitschaufeln 15 der zweiten Leitschaufelgruppe 22. Auch hier besitzen die drei linken Leitschaufeln 15 eine andere Orientierung gegenüber der Axialrichtung 18 als die beiden rechten Leitschaufeln 15.

Des Weiteren ist insbesondere den Fig. 11 und 12 zu entnehmen, dass innerhalb der jeweiligen Leitschaufelgruppe 21, 22 jeweils wenigstens eine Leitschaufel 14, 15 vorhanden ist, die eine größere Schaufellänge als die übrigen Leitschaufeln 14, 15 innerhalb derselben Leitschaufelgruppe 21, 22 aufweist. In den Fig. 11 und 12 sind die längeren Leitschaufeln mit 14' bzw. 15' gekennzeichnet. Erkennbar enthält jede Leitschaufelgruppe 21, 22 drei Leitschaufeln 14', 15' die länger sind als die übrigen Leitschaufeln 14, 15. Diese längere Leitschaufeln 14', 15' sind auch in Fig. 8 erkennbar. Zweckmäßig sind jedoch die ersten Leitschaufeln 14 und die zweiten Leitschaufeln 15 im Wesentlichen identisch ausgestaltet. Insbesondere entsprechen die kürzeren ersten Leitschaufeln 14 den kürzeren zweiten Leitschaufeln 15, während die längeren ersten Leitschaufeln 14' den längeren zweiten Leitschaufeln 15' entsprechen.

Ferner ist hier vorgesehen, dass die erste Leitschaufelgruppe 21 und die zweite Leitschaufelgruppe 22 jeweils dieselbe Anzahl an Leitschaufeln 14, 15 enthalten. In den gezeigten Beispielen enthält jede Leitschaufelgruppe 21, 22 jeweils fünf Leitschaufeln 14, 15. Es ist klar, dass grundsätzlich auch andere Anzahlen möglich sind. Ferner sind hier nur zwei Leitschaufelgruppen 21, 22 ausgebildet. Die beiden Leitschaufelgruppen 21, 22 erstrecken sich dabei in der Umfangsrichtung 17 im Wesentlichen gleich weit, also jeweils über 180°, sodass jede Leitschaufelgruppe 21, 22 jeweils etwa einen halben Umfang des Abschnitts 13 einnimmt. Auch hier ist klar, dass auch andere Unterteilungen und andere Anzahlen an Leitschaufelgruppen möglich sind.

Sämtliche Leitschaufeln 14, 15 enden radial innen, also im Bereich ihrer Schaufelspitzen 31 freistehend. Ferner erstrecken sich die Leitschaufeln 14, 15 jeweils so, dass sie einander nicht berühren. Gemäß Fig. 8 enden alle Leitschaufeln 14, 15 vor der Längsmittelachse 24. Bei einer anderen Ausführungsform kann dagegen wenigstens eine der Leitschaufeln 14, 15 so lang ausgestaltet sein, dass sie sich über die Längsmittelachse 24 hinaus erstreckt und dadurch auch den in Fig. 8 zentral offenen, die Längsmittelachse 24 enthaltenden Kernbereich abdeckt.

Bei der in den Fig. 8 bis 11 vorgestellten bevorzugten Ausführungsform sind die axial zueinander versetzten Leitschaufelgruppen 21, 22 nur an der Anströmseite des Mischers 12 angeordnet, die der ersten Axialseite 19 entspricht und im Folgenden auch mit 19 bezeichnet wird. Diese bevorzugte Ausführungsform ist auch bei den Figuren 1 und 2 angedeutet. Dort sind die beiden Leitschaufelgruppen 21, 22 an der Anströmseite 19 vereinfacht dargestellt. Auch dort sind die Leitschaufeln 14, 15 ausschließlich an der Anströmseite 19 vorgesehen.

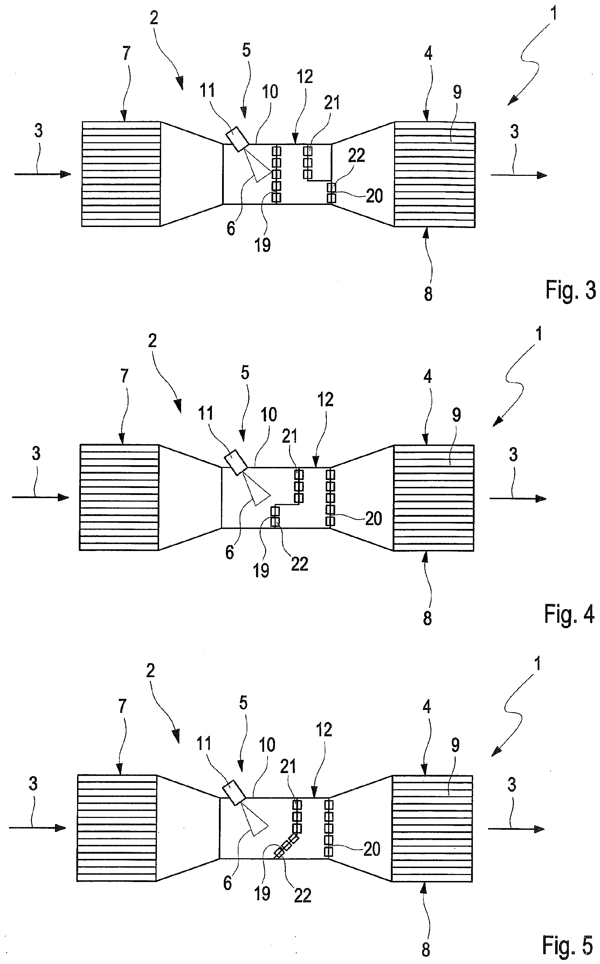

In den Fig. 3 bis 7 sind rein exemplarisch weitere Ausführungsformen für den Mischer 12 angedeutet, die sich insbesondere dadurch charakterisieren, dass auch an der Abströmseite Leitschaufeln angeordnet sind. Die Abströmseite entspricht der zweiten Axialseite 20 und kann im Folgenden ebenfalls mit 20 bezeichnet werden. Ferner ist in Fig. 3 eine Ausführungsform gezeigt, bei welcher die gestufte Anordnung bzw. die Einteilung der Leitschaufeln 14, 15 in Leitschaufelgruppen 21, 22 an der Abströmseite 20 erfolgt. Im Unterschied dazu sind die Leitschaufeln an der Anströmseite 19 in einem gemeinsamen Axialabschnitt des Rohrabschnitts 13 angeordnet.

Bei der in Fig. 4 gezeigten Ausführungsform ist der Mischer 12 aus Fig. 3 mit umgekehrten Axialseiten 19, 20 eingebaut, so dass nun wieder die gestufte Anordnung der Leitschaufeln an der Anströmseite 19 zu finden ist, während die Leitschaufeln an der Abströmseite 20 in einem gemeinsamen Axialabschnitt des Rohrabschnitts 13 angeordnet sind.

In Fig. 5 sind die Leitschaufeln 15 der zur Anströmseite 19 hin versetzten zweiten Leitschaufelgruppe 22 außerdem innerhalb der zweiten Leitschaufelgruppe 22 axial zueinander versetzt angeordnet, wodurch innerhalb der zweiten Leitschaufelgruppe 22 ein mehrstufiger Übergang zu den Leitschaufeln 14 der ersten Leitschaufelgruppe 21 geschaffen wird, die zur Abströmseite 20 hin versetzt angeordnet ist.

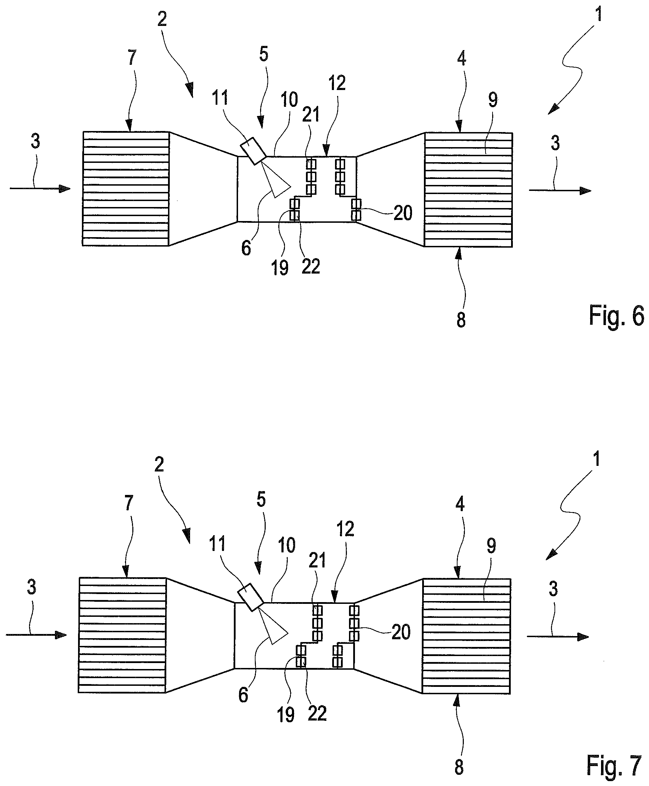

Bei der in Fig. 6 gezeigten Ausführungsform finden sich sowohl an der Anströmseite 19 als auch an der Abströmseite 20 zwei Leitschaufelgruppen mit axial zueinander versetzten Leitschaufeln. Auch bei der in Fig. 7 gezeigten Ausführungsform sind anströmseitig und abströmseitig jeweils zwei Leitschaufelgruppen erkennbar, die axial zueinander versetzt sind. Bei der in Fig. 6 gezeigten Ausführungsform ist dabei der Versatz der beiden Leitschaufelgruppen an der Anströmseite 19 gegensinnig zur Abströmseite 20. Im Unterschied dazu ist bei der in Fig. 7 gezeigten Ausführungsform der Versatz der beiden Leitschaufelgruppen an der Anströmseite 19 und an der Abströmseite 20 gleichsinnig.

Gemäß den in den Fig. 1 bis 7 gezeigten Ausführungsformen ist der Injektor 11 seitlich an der Rohranordnung 10 angeordnet. Ferner ist der vorstehend beschriebene Mischer 12 bei den Ausführungsformen der Fig. 1, 2 und 4 bis 7 in der Rohranordnung 10 so angeordnet, dass sich die beiden Leitschaufelgruppen 21, 22 jeweils an der Anströmseite 19 des Mischers 12 befinden. Ferner erfolgt die Anordnung des Mischers 12 hinsichtlich seiner Drehlage so, dass die erste Leitschaufelgruppe 21 dem Injektor 11 zugewandt ist, während die zweite Leitschaufelgruppe 22 vom Injektor 11 abgewandt ist. Dementsprechend befindet sich die erste Leitschaufelgruppe 21 in einem bezüglich des Injektors 11 proximalen Querschnittsbereich, während die zweite Leitschaufelgruppe 22 in einem bezüglich des Injektors 11 distalen Querschnittsbereich angeordnet ist. Des Weiteren ist die erste Leitschaufelgruppe 21 in Richtung der Abströmseite 20 des Mischers 12 zur zweiten Leitschaufelgruppe 22 axial versetzt angeordnet.

Bei den hier gezeigten Ausführungsformen ist außerdem der Injektor 11 so angeordnet bzw. ausgestaltet, dass der damit erzeugbare Sprühstrahl 6 gegenüber der Axialrichtung 18 des Mischers 12 geneigt ist. Beispielsweise kann der Sprühstrahl 6 etwa um 45° gegenüber der Axialrichtung 18 des Mischers 12 geneigt sein.

Bei der in Fig. 2 gezeigten speziellen Ausführungsform besitzt die Rohranordnung 10 stromauf des Mischers 12 einen Bogen 37 der in der Abgasströmung 3 ein seitliches bzw. wandnahes Todwassergebiet 38 erzeugt, das dem Injektor 11 gegenüberliegt. Der Mischer 12 ist nun in der Rohranordnung 10 so positioniert, dass die zweite Leitschaufelgruppe 22 in dieses Todwassergebiet 38 axial hineinragt.

Bei der in Fig. 2 gezeigten Ausführungsform ist außerdem bemerkenswert, dass der zuvor genannte Bogen 37 einen Bogenwinkel von etwa 90° beschreibt. Die Abgasströmung 3 wird somit um 90° umgelenkt. Unmittelbar stromauf des Bogens 37 ist hier der Oxidationskatalysator 7 angeordnet. Im Beispiel der Fig. 2 ist in der Rohranordnung 10 ein weiterer Bogen 39 ausgebildet, der eine weitere Strömungsumlenkung bewirkt, vorzugsweise ebenfalls um etwa 90°. Der erste Bogen 37 und dieser zweite Bogen 39 liegen dabei zweckmäßig in derselben Ebene, so dass die Abgasströmung insgesamt um 180° umgelenkt wird. Unmittelbar an den zweiten Bogen 39 schließt der SCR-Katalysator 4 bzw. der mit der SCR-Katalysator-Beschichtung 9 versehene Partikelfilter 8 an. Hierdurch ergibt sich eine besonders kompakte Bauform für die Reaktionsmitteleinspritzeinrichtung 5.

## Patentansprüche

1. Mischer für eine Abgasanlage (1) einer Brennkraftmaschine zum Vermischen eines Reaktionsmittels mit einer Abgasströmung (3),
- mit einem Rohrabschnitt (13), der einen von der Abgasströmung (3) durchströmbaren Strömungsquerschnitt (16) in einer Umfangsrichtung (17) einfasst und der sich in einer Axialrichtung (18) von einer ersten Axialseite (19) des Rohrabschnitts (13) bis zu einer zweiten Axialseite (20) des Rohrabschnitts (13) erstreckt,
- mit mehreren jeweils einen Anstellwinkel (29, 30) gegenüber der Axialrichtung (18) aufweisenden Leitschaufeln (14, 15), die wenigstens an einer Axialseite (19, 20) vom Rohrabschnitt (13) so abstehen, dass sie in den Strömungsquerschnitt (16) hineinragen, wobei die Leitschaufeln (14, 15) wenigstens in eine erste Leitschaufelgruppe (21) und eine zweite Leitschaufelgruppe (22) eingeteilt sind und die Leitschaufeln (14) der ersten Leitschaufelgruppe (21) gegenüber den Leitschaufeln (15) der zweiten Leitschaufelgruppe (22) axial versetzt angeordnet sind,
wobei die Anstellwinkel (29) der Leitschaufeln (14) der ersten Leitschaufelgruppe (21) entgegengesetzt zu den Anstellwinkeln (30) der Leitschaufeln (15) der zweiten Leitschaufelgruppe (22) orientiert sind,
**dadurch gekennzeichnet,**
**dass** die erste Leitschaufelgruppe (21) und die zweite Leitschaufelgruppe (22) in der Umfangsrichtung aufeinander folgend einander benachbart sind, so dass sich jede Leitschaufelgruppe (21, 22) nur über einen Teil des Umfangs des Rohrabschnitts (13) erstreckt und die beiden Leitschaufelgruppen (21, 22) einander in Axialrichtung (18) nicht überdecken.

2. Mischer nach Anspruch 1,
**dadurch gekennzeichnet,**
**dass** an einer der Axialseiten (19, 20) die zugehörigen Leitschaufeln (14, 15) in die wenigstens zwei, axial zueinander versetzt angeordneten Leitschaufelgruppen (21, 22) unterteilt sind.

3. Mischer nach Anspruch 1,
**dadurch gekennzeichnet,**
**dass** die Leitschaufeln (14) der ersten Leitschaufelgruppe (21) an der einen Axialseite (19) angeordnet sind, während die Leitschaufeln (15) der zweiten Leitschaufelgruppe (22) an der anderen Axialseite (20) angeordnet sind.

4. Mischer nach einem der Ansprüche 1 bis 3,
**dadurch gekennzeichnet,**
**dass** die Leitschaufeln (14) der ersten Leitschaufelgruppe (21) andere Anstellwinkel (29, 30) aufweisen als die Leitschaufeln (15) der zweiten Leitschaufelgruppe (22).

5. Mischer nach einem der Ansprüche 1-4,
**dadurch gekennzeichnet,**
**dass** der Rohrabschnitt (13) und die Leitschaufel (14, 15) durch ein einziges Blechformteil (23) gebildet sind.

6. Mischer nach einem der Ansprüche 1-5,
**dadurch gekennzeichnet,**
**dass** zumindest innerhalb einer der Leitschaufelgruppen (21, 22) wenigstens eine Leitschaufel (14, 15) einen anderen Anstellwinkel (29, 30) gegenüber der Axialrichtung (18) aufweist als wenigstens eine andere Leitschaufel (14, 15).

7. Mischer nach einem der Ansprüche 1-6,
**dadurch gekennzeichnet,**
**dass** zumindest eine Leitschaufel (14, 15) der einen Leitschaufelgruppe (21, 22) eine andere Schaufellänge aufweist als wenigstens eine Leitschaufel (14, 15) der anderen Leitschaufelgruppe (21, 22), wobei die Schaufellänge jeweils von einem am Rohrabschnitt (13) angeordneten Schaufelfuß (26) bis zu einer vom Rohrabschnitt (13) entfernten Schaufelspitze (31) gemessen ist.

8. Mischer nach einem der Ansprüche 1-7,
**dadurch gekennzeichnet,**
**dass** zumindest innerhalb einer der Leitschaufelgruppen (21, 22) wenigstens eine Leitschaufel (14', 15') eine andere Schaufellänge aufweist als wenigstens eine andere Leitschaufel (14, 15), wobei die Schaufellänge jeweils von einem am Rohrabschnitt (13) angeordneten Schaufelfuß (26) bis zu einer vom Rohrabschnitt (13) entfernten Schaufelspitze (31) gemessen ist

9. Mischer nach Anspruch 7 oder 8,
**dadurch gekennzeichnet,**
**dass** sich zumindest eine der längeren Leitschaufeln (14', 15') bis über eine Längsmittelachse (24) hinaus erstreckt.

10. Mischer nach einem der Ansprüche 1-5,
**dadurch gekennzeichnet,**
**dass** sich die erste Leitschaufelgruppe (21) und die zweite Leitsrhaufelgruppe (22) in der Umfangsrichtung (17) jeweils über einen Winkelbereich zwischen einschließlich 30° bis einschließlich 330°, vorzugsweise über einen Winkelbereich zwischen einschließlich 60° bis einschließlich 300°, insbesonder über einen Winkelbereich zwischen einschließlich 90° bis einschließlich 270°, oder jeweils etwa über den halben Umfang des Rohrabschnitts (13) erstrecken.

11. Mischer nach einem der Ansprüche 1-10,
**dadurch gekennzeichnet,**
- **dass** die erste Leitschaufelgruppe (21) und die zweite Leitschaufelgruppe (22) jeweils dieselbe Anzahl oder verschiedene Anzahlen an Leitschaufeln (14, 15) enthalten, und/oder
- **dass** die Leitschaufeln (14) der ersten Leitschaufelgruppe (21) eine andere Schaufelbreite besitzen als die Leitschaufeln (15) der zweiten Leitschaufelgruppe (22), und/oder
- **dass** alle Leitschaufeln (14, 15) relativ zueinander berührungsfrei angeordnet sind.

12. Reaktionsmiftelzufünreinrichtung für eine Abgasanlage (1) einer Brennkraftmaschine,
- mit einer Rohranordnung (10) zum Führen einer Abgasströmung (3),
- mit einem an der Rohranordnung (10) angeordneten Injektor (11) zum Erzeugen eines Sprühstrahls (6) aus Reaktionsmittel zum Einbringen des Reaktionsmittels in die Abgasströmung (3),
- mit einem bezüglich der Abgasströmung (3) stromab des Injektors (11) in der Rohranordnung (10) angeordneten Mischer (12) nach einem der Ansprüche 1 bis 11.

13. Einrichtung noch Anspruch 12,
**dadurch gekennzeichnet,**
- **dass** der Injektor (11) seitlich an der Rohranordnung (10) angeordnet ist,
- **dass** der Mischer (12) so angeordnet ist, dass sich die erste Leitschaufelgruppe (21) und die zweite Leitschaufelgruppe (22) an einer Anströmseite (19) des Mischers (12) befinden und dass die erste Leitschaufelgruppe (21) dem Injektor (11) zugewandt ist, während die zweite Leitschaufelgruppe (22) vom Injektor (11) abgewandt Ist,
- **dass** die Leitschaufeln (14) der ersten Leitschaufelgruppe (21) in Richtung einer Abströmseite (20) des Mischers (12) zu den Leitschaufeln (15) der zweiten Leitschaufelgruppe (22) axial versetzt angeordnet sind.

14. Einrichtung noch Anspruch 12 oder 13,
**dadurch gekennzeichnet,**
- **dass** die Rohranordnung (10) bezüglich der Abgasströmung (3) stromauf des Mischers (12) einen Bogen (37) aufweist, der in der Abgasströmung (3) ein Todwassergebiet (38) erzeugt,
- **dass** der Mischer (12) so angeordnet ist, dass sich die erste Leitschaufelgruppe (21) und die zweite Leitschaufelgruppe (22) an einer Anströmseite (19) des Mischers (12) befinden und dass die Leitschaufeln (15) der zweiten Leitschaufelgruppe (22) in das Todwassergebiet (38) axial hineinragen.

15. Abgasanlage für eine Brennkraftmaschine,
- mit einem SCR-Katalysator (9),
- mit einer stromauf des SCR-Katalysators (9) angeordneten Reaktionsmittelzuführeinrichtung (5) nach einem der Ansprüche 12 bis14.

## Claims

1. Mixer for an exhaust gas system (1) of a combustion engine for mixing a reactant with an exhaust gas flow (3),
- with a pipe portion (13), enclosing a flow cross-section (16) through which the exhaust gas flow (3) may circulate in a circumferential direction (17) and extending in an axial direction (18) from a first axial side (19) of the pipe portion (13) to a second axial side (20) of the pipe portion (13),
- with several guide blades (14, 15), each having an angle of attack (29, 30) in relation to the axial direction (18), projecting from the pipe portion (13) at least at one axial side (19, 20) so that they project into the flow cross section (16), wherein the guide blades (14, 15) are at least divided into a first guide blade group (21) and a second guide blade group (22) and wherein the guide blades (14) of the first guide blade group (21) are arranged axially offset to the guide blades (15) of the second guide blade group (22),
wherein the angles of attack (29) of the guide blades (14) of the first guide blade group (21) are oriented opposed to the angles of attack (30) of the guide blades (15) of the second guide blade group (22),
**characterized in that**
the first guide blade group (21) and the second guide blade group (22) are adjacent to another succeeding each other in the circumferential direction, so that each guide blade group (21, 22) extends only across part of the circumference of the pipe portion (13) and so that the two guide blade groups (21, 22) do not overlap each other in the axial direction (18).

2. Mixer according to claim 1,
**characterized in that**
at one of the axial sides (19, 20) the associated guide blades (14, 15) are divided into the at least two axially offset guide blade groups (21, 22).

3. Mixer according to claim 1,
**characterized in that**
the guide blades (14) of the first guide blade group (21) are arranged at one axial side (19), while the guide blades (15) of the second guide blade group (22) are arranged at the other axial side (20).

4. Mixer according to one of claims 1 to 3,
**characterized in that**
the guide blades (14) of the first guide blade group (21) have different angles of attack (29, 30) compared to the guide blades (15) of the second guide blade group (22).

5. Mixer according to one of claims 1 to 4,
**characterized in that**
the pipe portion (13) and the guide blade (14, 15) are formed by a single sheet metal forming part (23).

6. Mixer according to one of claims 1 to 5,
**characterized in that**
at least within one of the guide blade groups (21, 22) at least one guide blade (14, 15) has a different angle of attack (29, 30) in relation to the axial direction (18) compared to at least one other guide blade (14, 15).

7. Mixer according to one of claims 1 to 6,
**characterized in that** at least one guide blade (14, 15) of one guide blade group (21, 22) has another guide blade length than at least one guide blade (14, 15) of the other guide blade group (21, 22), wherein the guide blade length is measured from a blade foot (26) arranged at the pipe portion (13) to a blade tip (31) opposed to the pipe portion (13).

8. Mixer according to one of claims 1 to 7,
**characterized in that**
at least within one of the guide blade groups (21, 22) at least one guide blade (14', 15') has a different guide blade length than at least one other guide blade (14, 15), wherein the guide blade length is measured from a blade foot (26) arranged at the pipe portion (13) to a blade tip (31) opposed to the pipe portion (13).

9. Mixer according to claim 7 or 8,
**characterized in that** at least one of the longer guide blades (14', 15') extends beyond a longitudinal central axis (24).

10. Mixer according to one of claims 1 to 5,
**characterized in that**
the first guide blade group (21) and the second guide blade group (22) extend in the circumferential direction (17) across an angle range including 30° to 330°, preferably across an angle range including 60° to 300°, in particular across an angle range including 90° to 270° or approximately across half of the circumference of the pipe portion (13).

11. Mixer according to one of claims 1 to 10,
**characterized in that**
- the first guide blade group (21) and the second guide blade group (22) each comprise the same number or different numbers of guide blades (14, 15) and/or
- the guide blades (14) of the first guide blade group (21) have a different guide blade width compared to the guide blades (15) of the second guide blade group (22) and/or
- all guide blades (14, 15) are arranged without contacting each other.

12. Reactant supply device for an exhaust gas system (1) of a combustion engine,
- with a pipe arrangement (10) for guiding an exhaust gas flow (3),
- with an injector (11) arranged at the pipe arrangement (10) for generating a spray jet (6) of reactant for inserting the reactant into the exhaust gas flow (3),
- with a mixer (12) arranged in the pipe arrangement (10) downstream of the injector (11) in relation to the exhaust gas flow (3) according to one of claims 1 to 11.

13. Device according to claim 12,
**characterized in that**
- the injector (11) is arranged laterally at the pipe arrangement (10),
- the mixer (12) is arranged so that the first guide blade group (21) and the second guide blade group (22) are situated on an upstream side (19) of the mixer (12) and that the first guide blade group (21) faces the injector (11) whereas the second guide blade group (22) faces away from the injector (11),
- that the guide blades (14) of the first guide blade group (21) are arranged axially offset to the guide blades (15) of the second guide blade group (22) in a direction of a downstream side (20) of the mixer (12).

14. Device according to claim 12 or 13,
**characterized in that**,
- upstream of the mixer (12) in relation to the exhaust gas flow (3), the pipe arrangement (10) comprises a bending (37) which generates a dead water area (38) in the exhaust gas flow (3),
- the mixer (12) is arranged so that the first guide blade group (21) and the second guide blade group (22) are situated on an upstream side (19) of the mixer (12) and **in that** the guide blades (15) of the second guide blade group (22) axially project into the dead water area (38).

15. Exhaust gas system for a combustion engine,
- with an SCR catalyst (9),
- with a reactant supply device (5) according to one of claims 12 to 14 arranged upstream of the SCR catalyst (9).

## Revendications

1. Mélangeur pour une installation de gaz d'échappement (1) d'un moteur à combustion pour mélanger un réactif avec un courant de gaz d'échappement (3),
- avec une portion de tuyau (13) qui encadre dans un sens circonférentiel (17) une section transversale d'écoulement (16) à travers laquelle le courant de gaz d'échappement (3) peut passer et qui s'étend dans un sens axial (18) d'un premier côté axial (19) de la portion de tuyau (13) à un deuxième côté axial (20) de la portion de tuyau (13),
- avec plusieurs aubes de guidage (14, 15) comprenant respectivement un angle d'attaque (29, 30) par rapport au sens axial (18), qui font saillie de la portion de tuyau (13) au moins à un côté axial (19, 20) de sorte qu'elles font saillie dans la section transversale d'écoulement (16), où les aubes de guidage (14, 15) se distribuent sur au moins un premier groupe d'aubes de guidage (21) et un deuxième groupe d'aubes de guidage (22), et où les aubes de guidage (14) du premier groupe d'aubes de guidage (21) sont arrangées décalées axialement par rapport aux aubes de guidage (15) du deuxième groupe d'aubes de guidage (22),
où les angles d'attaque (29) des aubes de guidage (14) du premier groupe d'aubes de guidage (21) sont arrangées de manière opposée aux angles d'attaque des aubes de guidage (15) du deuxième groupe d'aubes de guidage (22),
**caractérisé en ce que**
le premier groupe d'aubes de guidage (21) et le deuxième groupe d'aubes de guidage (22) sont adjacents successivement dans le sens circonférentiel, de sorte que chaque groupe d'aubes de guidage (21, 22) s'étend seulement sur une partie de la circonférence de la portion de tuyau (13) et de sorte que les deux groupes d'aubes de guidage (21, 22) ne se recouvrent pas dans le sens axial (18).

2. Mélangeur selon la revendication 1,
**caractérisé en ce que** à un des côtés axiaux (19, 20) les aubes de guidage (14, 15) associées se distribuent sur les au moins deux groupes d'aubes de guidage (21, 22) axialement déplacées l'un par rapport à l'autre.

3. Mélangeur selon la revendication 1,
**caractérisé en ce que** les aubes de guidage (14) du premier groupe d'aubes de guidage (21) sont arrangées à un côté axial (19) tandis que les aubes de guidage (15) du deuxième groupe d'aubes de guidage (22) sont arrangées à l'autre côté axial (20).

4. Mélangeur selon une des revendications 1 à 3,
**caractérisé en ce que**
les aubes de guidage (14) du premier groupe d'aubes de guidage (21) ont d'autres angles d'attaque (29, 30) que les aubes de guidage (15) du deuxième groupe d'aubes de guidage (22).

5. Mélangeur selon une des revendications 1 à 4,
**caractérisé en ce que**
la portion de tuyau (13) et les aubes de guidage (14, 15) sont réalisées par une seule pièce de forme en tôle (23).

6. Mélangeur selon une des revendications 1 à 5,
**caractérisé en ce que**
au moins au sein de l'un des groupes d'aubes de guidage (21, 22) au moins une aube de guidage (14, 15) a un angle d'attaque (29, 30) différent par rapport au sens axial (18) comparé à au moins une autre aube de guidage (14,15).

7. Mélangeur selon une des revendications 1 à 6,
**caractérisé en ce que**
au moins une aube de guidage (14, 15) d'un groupe d'aubes de guidage (21, 22) a une longueur d'aube différente comparé à au moins une aube de guidage (14, 15) de l'autre groupe d'aubes de guidage (21, 22), où la longueur d'aube est mesurée respectivement entre un talon de l'aube (26) arrangé à la portion de tuyau (13) et une extrémité de l'aube (31) éloignée de la portion de tuyau (13).

8. Mélangeur selon une des revendications 1 à 7,
**caractérisé en ce que**
au moins au sein d'un des groupes d'aubes de guidage (21, 22) au moins une aube de guidage (14', 15') a une longueur d'aube différente comparé à au moins une autre aube de guidage (14, 15), où la longueur d'aube est mesurée respectivement entre un talon de l'aube (26) arrangé à la portion de tuyau (13) et une extrémité de l'aube (31) éloignée de la portion de tuyau (13).

9. Mélangeur selon les revendications 7 ou 8,
**caractérisé en ce que**
au moins une des aubes de guidage (14', 15') plus longues s'étend au-delà d'un axe central longitudinal (24).

10. Mélangeur selon une des revendications 1 à 5,
**caractérisé en ce que**
le premier groupe d'aubes de guidage (21) et le deuxième groupe d'aubes de guidage (22) s'étendent dans le sens circonférentiel (17) respectivement sur une zone angulaire comprise entre 30° et 330°, de préférence sur une zone angulaire comprise entre 60° et 300° et en particulier sur une zone angulaire comprise entre 90° et 270°, ou respectivement sur plus ou moins la moitié de la circonférence de la portion de tuyau (13).

11. Mélangeur selon une des revendications 1 à 10,
**caractérisé en ce que**
- le premier groupe d'aubes de guidage (21) et le deuxième groupe d'aubes de guidage (22) comprennent le même nombre ou des nombres différents d'aubes de guidage (14, 15), et/ou
- les aubes de guidage (14) du premier groupe d'aubes de guidage (21) ont une largeur d'aube différente comparée aux aubes de guidage (15) du deuxième groupe d'aubes de guidage (22), et/ou
- toutes les aubes de guidage (14. 15) sont arrangées sans contact mutuel l'une par rapport à l'autre.

12. Dispositif d'alimentation de réactif pour une installation de gaz d'échappement (1) d'un moteur à combustion,
- avec un arrangement de tuyau (10) pour guider un courant de gaz d'échappement (3),
- avec un injecteur (11) arrangé à l'arrangement de tuyau (10) pour générer un jet de pulvérisation (6) de réactif pour insérer le réactif dans le courant de gaz d'échappement (3),
- avec un mélangeur (12) arrangé dans l'arrangement de tuyau (10) en aval de l'injecteur (11) par rapport au courant de gaz d'échappement (3) selon une des revendications 1 à 11.

13. Dispositif selon la revendication 12,
**caractérisé en ce que**
- l'injecteur (11) est arrangé latéralement à l'arrangement de tuyau (10),
- le mélangeur (12) est arrangé de sorte que le premier groupe d'aubes de guidage (21) et le deuxième groupe d'aubes de guidage (22) sont situés à un côté amont (19) du mélangeur (12) et que le premier groupe d'aubes de guidage (21) est orienté vers l'injecteur tandis que le deuxième groupe d'aubes de guidage (22) est détourné de l'injecteur (11),
- les aubes de guidage (14) du premier groupe d'aubes de guidage (21) sont arrangées radialement décalées par rapport aux aubes de guidage (15) du deuxième groupe d'aubes de guidage (22) dans les sens d'un côté aval (20) du mélangeur (12).

14. Dispositif selon la revendication 12 ou 13,
**caractérisé en ce que**
- l'arrangement de tuyau (10) comprend un arc (37) en amont du mélangeur (12) par rapport au courant de gaz d'échappement (3) qui produit une région de remous (38),
- le mélangeur (12) est arrangé de sorte que le premier groupe d'aubes de guidage (21) et le deuxième groupe d'aubes de guidage (22) sont situés à un côté amont (19) du mélangeur (12) et **en ce que** les aubes de guidage (15) du deuxième groupe d'aubes de guidage (22) font saillie axialement dans la région de remous (38).

15. Système de gaz d'échappement pour un moteur à combustion,
- avec un catalyseur SCR (9),
- avec un dispositif d'alimentation de réactif (5) selon une des revendications 12 à 14 arrangé en amont du catalyseur SCR (9).
